# EUROPEAN PATENT SPECIFICATION

(11) **EP 3 255 986 B1**
(45) Date of publication and mention of the grant of the patent: **07.10.2020**
(21) Application number: 15766631.4
(22) Date of filing: 07.08.2015
(51) Int. Cl.: A01M 7/00

(54) **PORTABLE APPARATUS FOR PEST CONTROL AND PROTECTION OF AREAS FROM THE PRESENCE OF INSECTS**
TRAGBARE VORRICHTUNG ZUR SCHÄDLINGSBEKÄMPFUNG UND ZUM SCHUTZ VON BEREICHEN VOR DER ANWESENHEIT VON INSEKTEN
APPAREIL PORTABLE POUR LA LUTTE CONTRE LES ORGANISMES NUISIBLES ET LA PROTECTION DE ZONES CONTRE LA PRÉSENCE D'INSECTES

(30) Priority: 27.11.2014 IT PI20140025 U
(43) Date of publication of application: 20.12.2017
(73) Proprietor: Freezanz System S.r.l. Unipersonale, 56038 Ponsacco (PI) (IT)
(72) Inventor: IACOPONI, Daniele, 56038 Ponsacco (PI) (IT)
(74) Representative: Leotta, Antonio
(86) International application number: PCT/IB2015/056030
(87) International publication number: WO 2016/083910

(56) References cited:
- US-A- 3 831 849
- US-A- 5 421 900
- US-A1- 2006 006 197
- US-A1- 2006 196 576
- US-A1- 2008 048 049
- US-A1- 2009 183 689
- US-A1- 2014 312 142

## Description

### Technical Field

The present invention fits into the category of equipment to avoid the presence of insects in both open spaces and communicating spaces, such as small gardens, terraces, verandas, porches and the like.

### Background Art

As is known, where coexist vegetation, plants, ponds, bushes it creates a positive environment for life and the proliferation of insects, including those of species harmful to humans, such as mosquitoes and other able to sting the skin with irritants.

In spring and summer, which would maximize the pleasure of spending time outdoors, there is also the period of greatest vitality of these insects, with the consequences and the hassle well known.

Of course, the harmful effects of insect bites can be greater for infants and children than adults, so that the problem can take on aspects that go far beyond simple itching or mild skin irritation.

For these reasons we try with many systems and devices to eliminate or at least away, these insects from areas where you want to be, without the use of protective lotions to be applied to the skin, which are quite effective in preventing bites, provided you do not leave uncovered portions untreated, but do not eliminate the presence of insects and discomfort from these procured.

A widely used system is the spray containing repellent or insecticide; another is the insecticide spiral, also known as a fumigator.

Both systems provide good results, at least in limited areas, at low cost, but must be repeated on a frequent basis.

Among the various systems and expedients used for such purposes, the most efficient are certainly those which provide for the spraying of aerosols which are deposited on the surfaces of all of the deformed area.

The most common treatment provides that the sprayed substance is a biocide (insecticide) able to kill the insect species present on the spot, coming into contact with the surfaces on which the substance has been deposited; obviously the latter, which evidently contains toxic substances, should be prepared in suitable concentration, so as to be lethal to insects but substantially harmless for humans.

The biocide substance, which is to be sprayed preferably when there are no people, has certain limitations: in the first place has a time-action of two three minutes, for which an insect that has come in contact with the substance still has the time to fly and to sting; Furthermore, the insect must settle on a treated surface so that the biocide substance can kill it.

The latter condition can not occur for insect species that have the ability to fly over without laying the treated area and therefore still retain their ability to sting.

That biocide substance therefore, by itself, does not completely solve the problem, so that to have an optimal outcome would be necessary to supplement the treatment with a second chemical repellent (insect-repellent) to be sprayed.

The latter is usually a natural product, non-toxic and therefore environmentally friendly that while it is extremely unpleasant to the insects, so as to induce them to move away, possesses a pleasant odour to humans, so that there are no contraindications to spray it in the presence of people.

To apply insecticide or insect-repellent treatments is known a portable device, such as that described and defended in the prior art document WO 2009 / 094338A2, provided at its front side of spray nozzles to spray the surrounding environment with the above biocide substance or with the repellent one.

The device mentioned above includes a column like external structure, equipped with wheels and handle to maneuver so that an operator can easily push or pull it to arrange it in the desired position, similarly to a trolley for the transport of luggage.

Inside the structure are arranged, inter alia:
- a product tank containing the biocide substance or the repellent one, in appropriate dilution;
- a pump adapted to draw the said substance from the reservoir, to send it, under pressure, through piping, to said spray nozzles, having adjustable orientation;
- a programmable control unit, connected to a keyboard for the starting and stopping of the device, the latter being accessible from the outside of the column structure;
- a rechargeable battery that supplies power to the organs of the device without the necessity of a connection to external power sources ;
- organs for charging the battery, to be connected with a connector to an external power source .

The above device further comprises a radio frequency remote control connected to the control unit and preferably having the sole function of stopping the device.

The cited document mentions, in addition, a series of accessory elements that may be present in the device, acting to various functions, such as signalling and / or safety checks that precede and, if appropriate, inhibit startup.

It is omitted here a complete list of such accessory elements, for which reference should be made to a direct examination of the same document, as not relating to the object of the present invention, as will be apparent hereinafter.

The device described in the above prior document presents its main limitation in the fact that it is shaped so as to be able to nebulize only the substance contained in its tank, so only the biocide substance or only the repellent one.

In order to spray the area to be protected with both substances or you have two of these devices, or it necessitates a laborious and impractical change operation of the vessel.

It is intuitive to understand how to have two devices is costly, therefore, often, one will have a single device and it is preferred to use the only biocide substance, probably with more frequent repetitions of the treatments, so as to obtain, in time, a more substantial reduction in the number of insects, and a more effective 'purification' of the area of interest.

Frequent treatments with biocide substance lead but some unwanted side effects on plants, leaves, flowers and even animals that may thus be damaged, and moreover it is necessary to prevent small children can ingest these substances by touching surfaces treated and then putting fingers in their mouth.

These problems are greater in areas that may be only partially open, such as terraces, verandas, porches and the like.

On the other hand, also spraying only the repellent substance is also a partial solution, since the insects are not reduced in number but only removed and are then ready to go back, at least in part, as soon as the effect of the substance above fades.

Another limitation of the device described in the aforementioned International Application WO 2009 / 094338A2 is inherent in the structure itself of the portable device which is designed to spread the biocide or repellent in the neighbourhood of the place where it is located, but it has to be manually moved to be able to protect different zones.

### Disclosure of Invention

### Summary of the Invention

The object of the present invention is therefore to propose a portable device for the disinfestation, and protection of spaces by the presence of insects, especially those harmful to humans, overcoming the efficacy of the devices of prior art, in particular to allow multiple treatments with biocide and repellent substances and to obtain, in the treated area, an optimal living for humans.

Another object of the invention concerns the desire to propose a portable device of simple and intuitive use, suitable therefore to be maneuvered even by people not particularly expert.

Still another object of the invention is to obtain a portable device with a high autonomy of operation as well as very versatile with regard to the function of charging the accumulators.

A further object of the present invention is to propose a portable device which can protect completely and without having to be continually moved areas of a certain size such as the plots of camping, verandas, balconies, or the like.

A further object of the invention lies in the creation of various versions of the portable device, united by the same construction but the main feature of specific characteristics, making each version more suited to the particular conditions of use.

Still another object of the invention aims to obtain a portable device valuable from the aesthetic as well as reliable, the whole with relatively low production costs.

These and other objects are fully achieved by a portable device according to claim 1.

### Description of Drawings

The characteristics of the invention will be made evident in the following description of preferred embodiments of the portable device for the disinfestation and protection of the invention, according to what specified in the claims and with the aid of the accompanying drawing tables, in which:
- Fig. 1 shows a schematic front view of a first example of a device with certain internal components indicated in dashed lines;
- Fig. 2 illustrates a side view of the device of Fig. 1, with certain internal components indicated by dashed lines and with associated a reversed partial view of a keyboard, to better represent the same;

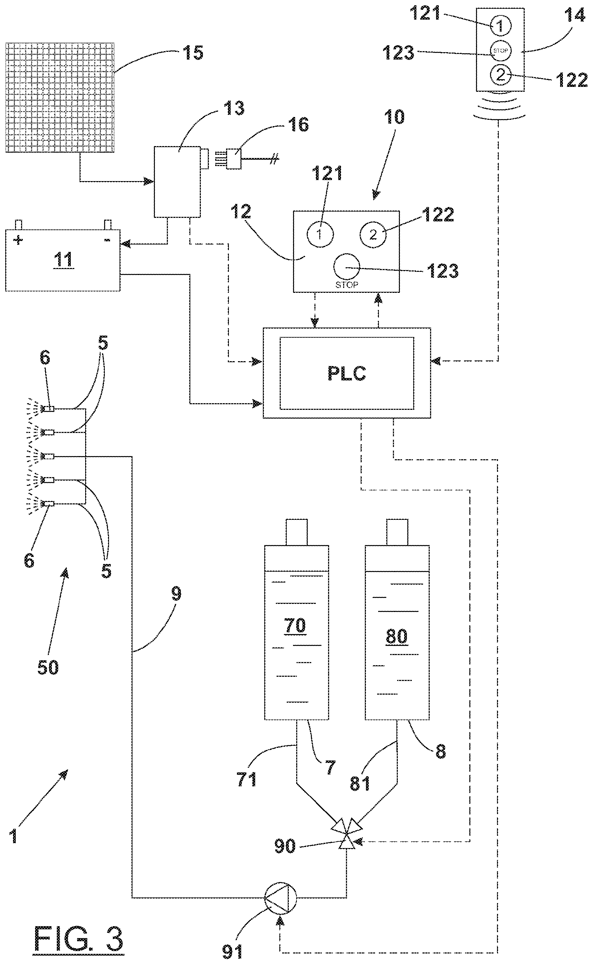

- Fig. 3 illustrates a functional scheme of the device;
- Fig. 4 illustrates a schematic front view of a second example of the subject device, with certain internal components indicated in dashed lines;
- Fig. 5 illustrates a side view of the device of Fig. 4, with certain internal components indicated in dashed lines;
- Fig. 6 illustrates a schematic perspective view of an embodiment of the device of the invention in the configuration of use.

### Description of Preferred Embodiments

In the figures listed above, it has been indicated with the reference 1, the portable device object of the present invention, in its entirety.

The portable device 1 is provided for the disinfestation, and protection of open spaces or spaces communicating with the outside, such as small gardens, terraces, verandas, porches and the like by the presence of insects, especially those harmful to humans such as mosquitoes and others able to sting.

The portable device 1 comprises a movable holding member 2 provided with opening parts 3, for example, doors or the like, to access the inside.

The characteristics of the movable holding member 2 will be better described below, with reference to the embodiments illustrated by way of example in the accompanying figures.

In the movable holding member 2 are housed at least two tanks 7, 8, for example of five litres each, respectively adapted to contain a first and a second liquid solution of active principles 70, 80.

Said first liquid solution 70 contains, in a suitable dilution, a biocide substance while the second solution 80 contains a repellent substance, also in suitable dilution.

These substances have been already discussed in the introduction, and their characteristics are known to the experts of the sector.

The tanks 7, 8 are accessible from the outside by opening a corresponding removable panel 31, which constitutes one of the aforementioned opening parts 3 of the movable holding member 2.

To facilitate the operations of filling, the tanks 7, 8, are advantageously provided with corresponding upper pipe unions 7B, 8B inclined towards the outside.

From the tanks 7, 8 extend, respectively, a first and a second outlet duct 71, 81, provided for the withdrawal from these of said first and second liquid solutions of active principles 70, 80.

The first and the second outlet duct 71, 81 converge in two ways of a electro-actuated three-way shut-off valve 90, from the third way of which originates a delivery conduit 9.

Along the delivery conduit 9 is arranged a pump 91, adapted to draw the above-mentioned first or second liquid solution of active principles 70, 80 from the respective tanks 7, 8 and to send them, under pressure, to a distribution system 50, connected to downstream of said delivery conduit 9.

The distribution system 50 is constituted by a plurality of ducts 5 provided, at their ends, with corresponding spray nozzles 6 adapted to project jets of said first or second liquid solution of active principles 70, 80 into the surrounding environment, with a predetermined direction.

According to a preferred constructional solution, said spray nozzles 6 are provided with corresponding anti-drip valves and are of the type with a swivel head.

In the portable device 1 are further provided command and control means 10, governed by an electronic processor and adapted to actuate and deactivate the device 1 in accordance with predetermined schedules and operating cycles, for spraying the said spaces with said first or second liquid solution of active principles 70, 80.

The said command and control means 10 comprise:
- a PLC unit (Programmable Logic Controller) functionally connected with said three-way shut-off valve 90 and pump 91;
- a keyboard 12 for user / device interface, connected to said PLC unit, provided with at least two start keys 121, 122, and a stop 123, respectively for activation and deactivation of a selected operating cycle of the device 1 and corresponding nebulization of said first or second liquid solution of active principles 70, 80;
- a radio frequency receiver, integrated in the aforementioned PLC unit, tuned to the signal emitted by a remote control 14, in which are provided the same two start keys 121, 122, and a stop 123 of the above-mentioned keyboard 12.

The said command and control means 10 are fed with electric current supplied by at least one rechargeable battery 11, and are in turn adapted to electrically supply the said three-way shut-off valve 90 and pump 91.

Said rechargeable battery 11 is associated with charging means 13, adapted to supply it with electric power taken from outside sources with voltage and intensity preset.

To this end the charging means 13 comprise a transformer and / or rectifier, of a substantially known type, and are adapted to receive electric power alternately, or in combination, by:
- an outside 12V or 24V DC line or a 220V AC line, which is connectable via a plug connector 16,
- at least one photovoltaic panel 15 associated to an outer surface of the aforementioned movable holding member 2.

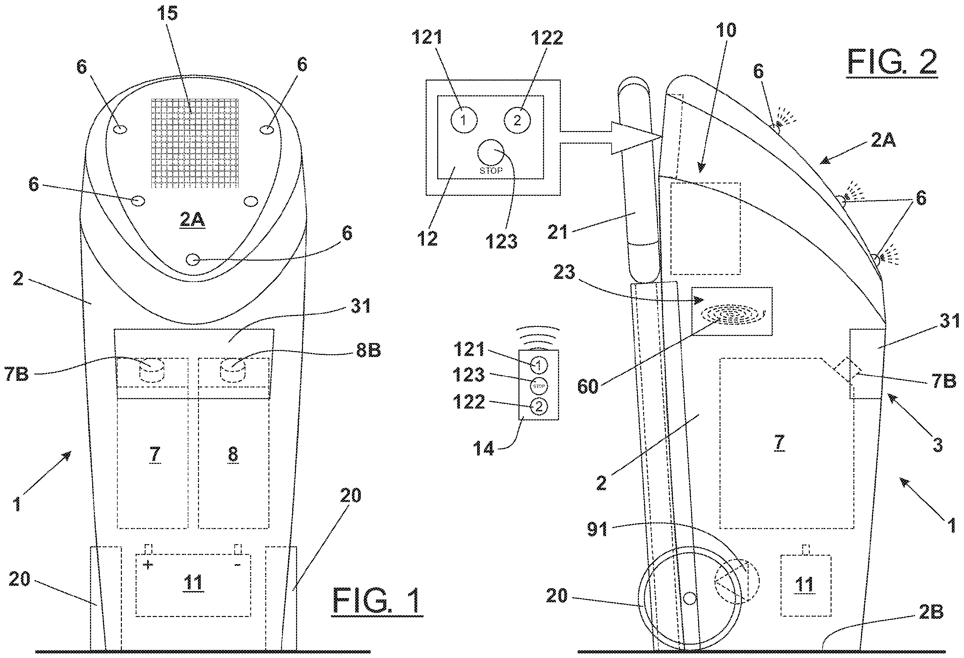

In a first example of a portable device 1, referred to Figs. 1 and 2, the said movable holding member 2 has the form of a tower with the upper face 2A inclined, and it is equipped with at least two wheels 20, arranged on a single axle with a offset position with respect to the center of mass of the tower 2 thereof, so that, in the absence of moving forces, it lays on the bottom face 2B and is stable in an upright position.

To said movable holding member 2, particularly suitable for domestic use, is associated with a maneuvering handle 21, possibly of the type extensible upwards, shaped so that an operator can exert on the same member 2 a tilting torque for rotating about the axis of the wheels 20 and lifting from the ground the lower face 2B, so as to move the device 1 without sliding.

The spray nozzles 6 are located in said upper face inclined 2A; the latter is advantageously convex (Fig. 2), so that the various spray nozzles 6 are arranged radially and can increase the total angle with which the spray droplets are projected into the surrounding environment.

However, in the device 1 are provided flexible extensions 60, made up of well-known commercial elements not shown in detail to be coupled, if necessary, with corresponding spray nozzles 6; in this way it is possible to move the jets of the latter in different positions from the original, so that the ejections of said first and second liquid solution of active principles 70, 80 affect different areas of coverage.

In the movable holding member 2 shown in Fig. 2 there is provided a housing 23 adapted to contain said flexible extensions 60 when not in use.

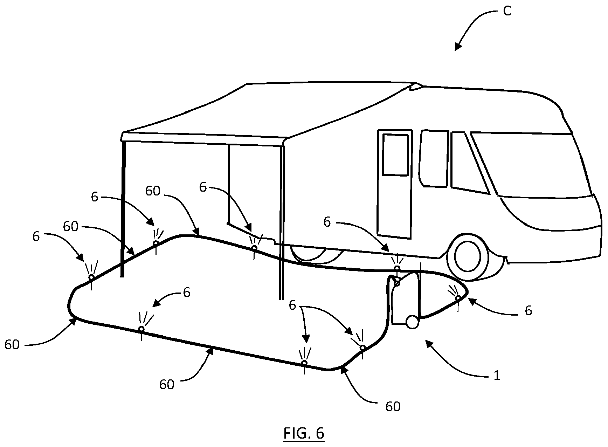

The invention is illustrated with reference to Fig. 6, in which the device 1 is configured to protect an area completely closed in front of a camper, C. The configuration shown in Fig. 6 is obtained by using a specific kit for protection of limited areas which is contained in the housing 23 when not in use. The aforementioned kit for protection of limited areas comprises a plurality of flexible extensions 60, a plurality of spray nozzles associated to the flexible extensions, pipe fitting elements, closure elements, which are not illustrated in detail since of known technique. Thanks to the kit described above, the configuration of Fig. 6 is obtained in the manner described below. The spray nozzles 6 are removably associated to the inclined face 2A of the device and are removed. A three-way fitting element replaces one of the spray nozzles 6 while closing elements are associated to the face 2A for replacing the other spray nozzles 6. To the two free ends of the three-way fitting element 3 are associated the flexible extensions providing spraying nozzles at preset distances, until it joins to create a closed path having a perimeter equal to the sum of the lengths of the flexible extensions used. The spraying nozzles used provide two inputs for extensions flexible and have advantageously associated a picket to allow stabilization to the ground. In this way, once the closed path is realized the spray nozzles are fixed to the ground so as to obtain the desired configuration, as shown in Fig. 6. The length of each element of the flexible extension is between 2 m and 5 m, taking into account the range of action of the spraying nozzles.

The above described configuration of the device of the invention is particularly advantageous to completely protect areas of limited extension without having to move the device 1 itself. For example, areas such as camping pitches, porches or terraces of housing, front porches of campers or caravans can be advantageously protected.

Returning now to the device illustrated in Fig. 1 and 2, in the same holding member 2, also, the aforementioned photovoltaic panel 15 is disposed in the said upper face inclined 2A, in almost central position, where it assumes optimum orientation for receiving solar rays (Fig. 1). In fact, the top face 2A is advantageously inclined by an angle comprised between 10° and 45° to the horizontal, so that the movable holding member can be oriented on the ground in a manner to maximize the amount of sunlight incident on the photovoltaic panel in the course of a day.

It is highlighted how the presence of the photovoltaic panel 15, in standard irradiation conditions, allows to increase the autonomy of operation given from the battery 11 until it coincides, more or less, with the time necessary to empty the tanks 7, 8.

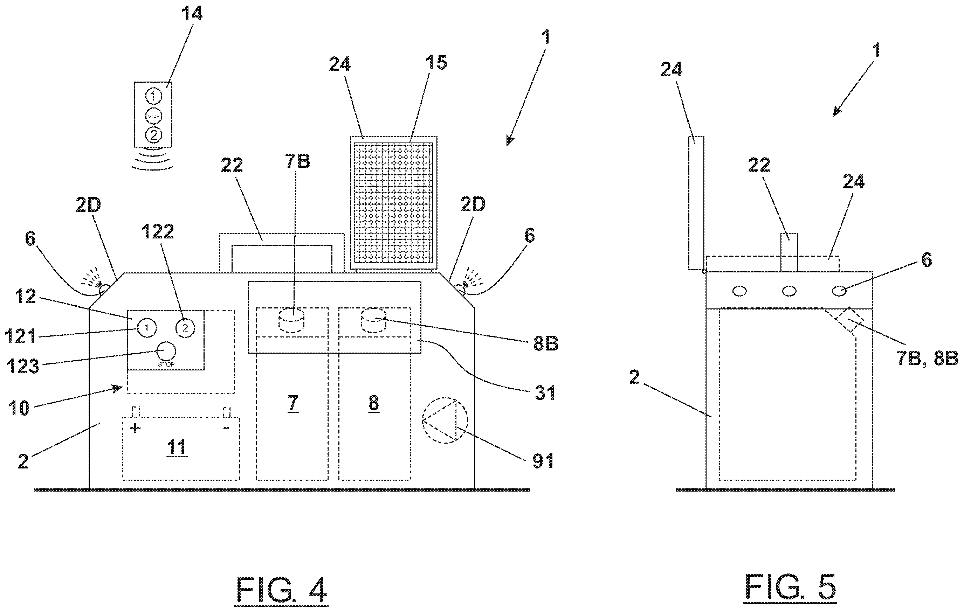

In a second example of a portable device 1, referred to Figs. 4 and 5, the said movable holding member 2 presents a prismatic shape and dimensions significantly lower than that first described, and is particularly suitable for all those applications where it is necessary to reduce the space occupied in the rest condition, such as in camping tents, campers, caravans or for parties or outdoor dining and the like.

To make it comfortable and easy to transport the device 1, to the mobile holding member 2 of prismatic shape is associated at least one gripping handle 22.

In the same movable holding member 2 are realized two opposite inclined side surfaces 2D, in which are located the said spray nozzles 6, with predefined orientation.

The photovoltaic panel 15 is integrated in a flat frame 24, hinged at the top of the holding member 2, on a side of the gripping handle 22, tilting from a closed horizontal position, shown in phantom in Fig. 5, in which the photovoltaic panel 15 is facing the holding member 2, to a standing open position, with variable inclination, in which the same photovoltaic panel 15 is adapted to receive the solar rays.

The technical solution just described enables, at the same time, to protect the photovoltaic panel 15 when it is at rest and to orient it suitably when in use, all without increasing the overall dimensions of the holding member 2 in the transport configuration.

From the above are clear the advantageous features of the portable device of the invention, able to achieve an effective disinfestation, and protection of open spaces, such as small gardens, terraces, verandas, porches and the like, from the presence of insects, especially those harmful to humans, surpassing the results obtainable with either the most common systems (cans and spirals insecticide) both with the devices of prior art, in particular to allow multiple treatments with biocide and with repellent substances.

In this regard it is right to highlight the fact that the above multiple treatments can minimize the use of the biocide substance, that as already mentioned in the introduction contains active toxic, in favour of the repellent which is completely ecological as it is obtained from natural substances.

The proposed device has high ease of use, thanks to the command and control means simple and intuitive, which are provided identical both on the device and on the remote control, so that is suitable to be maneuvered even by people not particularly expert.

The presence of a photovoltaic panel increases the autonomy of operation given by the battery, while the charging means are adaptable to all external sources, both for the most common direct and alternating currents.

A further advantageous aspect of innovation, made evident from the above description, lies in being able to create different versions of the mobile device, linked by the same construction main feature but with specific characteristics, making each version more suited to a particular conditions of use.

The embodiments illustrated by way of non-exhaustive example are also distinguished by the valuable aesthetic appearance.

The portable device, as proposed, is achievable using components mostly commercial, thereby ensuring production costs relatively low.

It is understood however that what above is just a not limiting example, therefore any modifications of detail that may be necessary due to technical and / or functional reasons, are considered since now as falling within the same protective scope defined by the claims below.

## Claims

1. Portable device for pest control and protection of areas from the presence of insects, particularly harmful to humans, comprising: :
- a movable holding member (2) provided with opening parts (3) to access the inside;
- at least two tanks (7, 8), housed in said movable holding member (2), respectively adapted to contain a first and a second liquid solution of active principles (70, 80);
- a first and a second outlet duct (71, 81), associated to the respective tanks (7, 8) and provided for the withdrawal from these of said first and second liquid solution of active principles (70, 80);
- a electro-actuated three-way shutoff valve (90), with two ways which connected to said first and second outlet duct (71, 81), while the third way connected to a delivery conduit (9);
- a pump (91), associated with said delivery conduit (9), adapted to draw the above-mentioned first or second liquid solution of active principles (70, 80) from the respective tanks (7, 8) and to send them, under pressure, to a distribution system (50), connected downstream of said delivery conduit (9) and constituted by a plurality of ducts (5) provided, at their ends, to the corresponding spray nozzles (6) adopted to project jets of said first or second liquid solution of active principles (70, 80) in the surrounding environment, with a predetermined direction;
- command and control means (10), governed by an electronic processor and adapted to actuate and deactivate the device (1) in accordance with predetermined schedules and operating cycles, for spraying the said areas with said first or second liquid solution of active principles (70 , 80);
- at least one rechargeable battery (11), intended to supply with electric power said command and control means (10) and, through these, the aforementioned three-way shut-off valve (90) and pump (91);
- recharge means (65), associated with said rechargeable battery (60), adapted to draw electric power from outside sources and to enter it into the latter with a predetermined voltage and intensity;
- a kit for protection of limited areas comprising a plurality of flexible extensions (60), a plurality of spray nozzles associated to the flexible extensions, connecting elements, closing elements and fitting elements so that a three-way
fitting element (3) replaces one of the spray nozzles (6) while closing elements are associated to the face (2A) for replacing the other spray nozzles (6), to the free ends of the fitting element (3) being associated the flexible extensions (60) providing spraying nozzles at preset distances, until they join to create a closed path having a perimeter equal to the sum of the lengths of the flexible extensions (60) used.

2. Portable device according to claim 1, **characterized in that** said command and control means (10) comprises: a unit (PLC - Programmable Logic Controller) functionally connected with said three-way shut-off valve (90) and pump (91); a keyboard (12) of a user / device interface, interconnected to the said unit (PLC), provided with at least two start buttons (121, 122) and one stop button (123), respectively for activation and deactivation of a selected operating cycle of the device (1) and of the corresponding spraying of said first or second liquid solution of active principles (70, 80).

3. Device according to claim 2, **characterized in that** in said command and control means (10) is provided a radio frequency receiver, integrated in the aforementioned unit (PLC), tuned to the signal emitted by a remote control (14), in which are provided the same two start buttons (121, 122) and one stop button (123) present in said keyboard (12).

4. Portable device according to claim 1, **characterized in that** said charging means (13) comprises a transformer and / or current rectifier and is adapted to receive electric power from at least a photovoltaic panel (15) associated to an outer surface of the aforementioned movable holding member (2).

5. Portable device according to claim 1, **characterized in that** said charging means (13) comprises a transformer and / or current rectifier and are adapted to receive electric power from an external electric line connectable via a plug connector (16).

6. Device according to claim 1, **characterized in that** said tanks (7, 8) are provided with a corresponding upper pipe union (7B, 8B) inclined and facing a removable panel (31) defining one of said opening parts (3) of said movable holding member (2).

7. Portable device according to claim 1, **characterized in that** said movable holding member (2) has the form of a tower with the upper face (2A) inclined, and is equipped with at least two wheels (20), arranged on a single axle with an offset position with respect to the center of mass of the tower 2 thereof, so that, in the absence of moving forces, it lays on the bottom face 2B and is stable in an upright position, and **in that** said spraying nozzles (6) are located in said inclined upper face (2A) with predetermined orientation.

8. Portable device according to claim 7, **characterized in that** said inclined upper face (2A) of the movable holding member (2) is convex.

9. Portable device according to claim 4 or 7, **characterized in that** said movable holding member (2) has an inclined upper face (2A) of an angle comprised between 10° and 45° to the horizontal, in which is positioned the said panel PV (15), so that the movable holding member can be oriented on the ground in a manner to maximize the amount of sunlight incident on the photovoltaic panel in the course of a day.

10. Portable device according to claim 7, **characterized in that** to said movable holding member (2) is associated with a maneuvering handle (21), shaped so that an operator can exert on the same member (2) a tilting torque for rotating about the axis of the wheels (20) and lifting from the ground the lower face (2B), so as to move the device (1) without sliding.

11. Portable device according to claim 1, **characterized in that there** said flexible extensions (60) are associated, if necessary, to corresponding spray nozzles (6) so that the jets of the latter have ejection positions different from the original and, consequently, different coverage areas, and **in that** in said movable holding member (2) is provided a housing (23) adapted to contain said flexible extensions (60) when not in use.

12. Portable device according to one of the preceding claims, **characterized in that** the spray nozzles (6) of said kit for protection of limited areas provide two inputs for flexible extensions and they have advantageously associated a picket to allow stabilization to the ground.

13. Portable device according to claim 1, **characterized in that** said movable holding member (2) has a prismatic shape and is provided with at least a grip handle (22).

14. Portable device according to claim 1, **characterized in that** in said holding member (2) are realized two opposite inclined side surfaces (2D), in which are located the said spray nozzles (6), with predefined orientation.

## Patentansprüche

1. Tragbares Gerät zur Schädlingsbekämpfung und zum Schutz von Gebieten vor der Anwesenheit von für den Menschen besonders schädlichen Insekten, bestehend aus:
- einem beweglichen Halteelement (2), das mit Öffnungsteilen (3) für den Zugang zum Inneren versehen ist;
- mindestens zwei Tanks (7, 8), die in dem beweglichen Halteelement (2) untergebracht sind und jeweils eine erste und eine zweite flüssige Lösung von Wirkstoffen (70, 80) enthalten können;
- einem ersten und einem zweiten Auslasskanal (71, 81), die mit den jeweiligen Tanks (7, 8) verbunden sind und für die Entnahme der ersten und der zweiten flüssige Lösung von Wirkstoffen (70, 80) aus diesen vorgesehen sind;
- einem elektrisch betätigten Dreiwege-Absperrventil (90), das zwei Wege aufweist, die mit dem ersten und dem zweiten Auslasskanal (71, 81) verbunden sind, während der dritte Weg mit einer Abgabeleitung (9) verbunden ist;
- einer Pumpe (91), die mit der Abgabeleitung (9) verbunden ist und dazu ausgelegt ist, die oben erwähnte erste oder zweite flüssige Lösung von Wirkstoffen (70, 80) aus den jeweiligen Tanks (7, 8) anzusaugen und sie unter Druck zu einem Verteilungssystem (50) zu schicken, das stromabwärts der Abgabeleitung (9) angeschlossen ist und aus einer Vielzahl von Kanälen (5) bestehet, die an ihren Enden mit entsprechenden Sprühdüsen (6) versehen sind, die geeignet sind, Strahlen der ersten oder zweiten flüssigen Lösung von Wirkstoffen (70, 80) mit einer vorbestimmten Richtung in die Umgebung zu projizieren;
- Befehls- und Steuermitteln (10), die von einem elektronischen Prozessor gesteuert werden und geeignet sind, die Vorrichtung (1) in Übereinstimmung mit vorbestimmten Zeitplänen und Betriebszyklen zu betätigen und zu deaktivieren, um die erste oder zweite flüssige Lösung von Wirkstoffen (70, 80) in die Bereiche zu sprühen;
- mindestens einer wiederaufladbare Batterie (1 1) zur Versorgung der Befehls- und Steuermittel (10) mit elektrischer Energie und, durch diese, des vorgenannten Dreiwege-Absperrventils (90) und der Pumpe (9);
- Wiederauflademitteln (65), die mit der wiederaufladbaren Batterie (60) verbunden sind und geeignet sind, elektrische Energie von externen Quellen zu beziehen und sie mit einer vorbestimmten Spannung und Intensität in die letztere einzuleiten;
- einen Bausatz zum Schutz begrenzter Bereiche, der eine Vielzahl von flexiblen Verlängerungen (60) mit einer Vielzahl von Sprühdüsen beinhaltet, die den flexiblen Verlängerungen, Verbindungselemente, Verschlusselemente und Passelemente zugeordnet sind, so dass ein Dreiwege-Passelement (3) eine der Sprühdüsen (6) ersetzt, während Verschlusselemente der Fläche (2A) zum Ersetzen der anderen Sprühdüse (6) zugeordnet sind, wobei die flexiblen Verlängerungen (60) mit den freien Enden des Passelements (3) verbunden sind, um Sprühdüsen in vorgegebenen Abständen bereitzustellen, bis sie sich verbinden, um einen geschlossenen Weg zu schaffen, dessen Umfang gleich der Summe der Längen der verwendeten flexiblen Verlängerungen (60) ist.

2. Tragbare Vorrichtung nach Anspruch 1, **dadurch gekennzeichnet, dass** die Befehls- und Steuermittel (10) umfasst: eine Einheit (PLC - Programmable Logic Controller), die funktionell mit dem Drei-Wege-Absperrventil (90) und der Pumpe (91) verbunden ist; eine Tastatur (12) einer Benutzer/Vorrichtungs-Schnittstelle, die mit der Einheit (PLC) verbunden ist und mit mindestens zwei Starttasten (121, 122) und einer Stopptaste (123) versehen ist, jeweils zur Aktivierung und Deaktivierung eines ausgewählten Betriebszyklus der Vorrichtung (1) und des entsprechenden Versprühens der ersten oder zweiten flüssige Lösung von Wirkstoffen (70, 80).

3. Tragbare Vorrichtung nach Anspruch 2, **dadurch gekennzeichnet, dass** in den Befehls- und Steuermitteln (10) ein in der vorgenannten Einheit (PLC) integrierter Radiofrequenzempfänger vorgesehen ist, der auf das von einer Fernbedienung (14) ausgesandte Signal abgestimmt ist, wobei die gleichen zwei Starttasten (121, 122) und eine Stopptaste (123) vorgesehen sind, die in der Tastatur (12) vorhanden sind.

4. Tragbare Vorrichtung nach Anspruch 1, **dadurch gekennzeichnet, dass** eine Ladeeinrichtung (13) einen Transformator und/oder einen Stromgleichrichter umfasst und dafür ausgelegt ist, elektrische Energie von mindestens einer photovoltaischen Platte (15) zu empfangen, die mit einer Außenfläche des oben genannten beweglichen Halteelements (2) verbunden ist.

5. Tragbare Vorrichtung nach Anspruch 1, **dadurch gekennzeichnet, dass** die Ladeeinrichtung (13) einen Transformator und/oder einen Stromgleichrichter umfasst und so ausgelegt ist, dass sie elektrische Energie von einer externen elektrischen Leitung erhalt, die über einen Steckverbinder (16) angeschlossen werden kann.

6. Tragbare Vorrichtung nach Anspruch 1, **dadurch gekennzeichnet, dass** die Behälter (7, 8) mit einem entsprechenden oberen Rohranschluss (7B, 8B) versehen sind, der geneigt ist und einer abnehmbaren Platte (31) zugewandt ist, die einen der Öffnungsteile (3) des beweglichen Halteelements (2) definiert.

7. Tragbare Vorrichtung nach Anspruch 1, **dadurch gekennzeichnet, dass** das beweglichen Halteelement (2) die Form eines Turms mit geneigter Oberseite (2A) hat und mit mindestens zwei Rädern (20) ausgestattet ist, die auf einer einzigen Achse mit einer versetzten Position in Bezug auf den Massenschwerpunkt des Turms 2 desselben angeordnet sind, so dass es in Abwesenheit von Bewegungskräften auf der Unterseite 2B aufliegt und in einer aufrechten Position stabil ist, und dass die Sprühdüsen (6) in der geneigten Oberseite (2A) mit vorbestimmter Ausrichtung angeordnet sind.

8. Tragbare Vorrichtung nach Anspruch 7, **dadurch gekennzeichnet, dass** die geneigte obere Fläche (2A) des beweglichen Halteelements (2) konvex ist.

9. Tragbare Vorrichtung nach Anspruch 4 oder 7, **dadurch gekennzeichnet, dass** das beweglichen Halteelement (2) eine geneigte Oberseite (2A) mit einem Winkel zwischen 10° und 45° zur Horizontalen aufweist, in dem die Platte PV (15) angeordnet ist, so dass das bewegliche Halteelement auf dem Boden so ausgerichtet werden kann, dass die Menge an Sonnenlicht, die im Laufe eines Tages auf die photovoltaische Platte fällt, maximiert wird.

10. Tragbare Vorrichtung nach Anspruch 7, **dadurch gekennzeichnet, dass** das bewegliche Halteelement (2) mit einem Manövriergriff (21) verbunden ist, der so geformt ist, dass ein Bediener auf dasselbe Element (2) ein Kippmoment ausüben kann, um sich um die Achse der Räder (20) zu drehen und die Unterseite (2B) vom Boden abzuheben, um die Vorrichtung (1) ohne Gleiten zu bewegen.

11. Tragbare Vorrichtung nach Anspruch 1, **dadurch gekennzeichnet, dass** die flexiblen Verlängerungen (60), falls erforderlich, mit entsprechenden Sprühdüsen (6) verbunden sind, so dass die Strahlen der letzteren andere Ausstoßpositionen als die ursprünglichen und folglich andere Abdeckungsbereiche haben, und dass in dem beweglichen Halteelement (2) ein Gehäuse (23) vorgesehen ist, das dazu geeignet ist, die flexiblen Verlängerungen (60) aufzunehmen, wenn sie nicht in Gebrauch sind.

12. Tragbare Vorrichtung nach einem der vorstehenden Ansprüche, **dadurch gekennzeichnet, dass** die Sprühdüsen (6) des Satzes zum Schutz begrenzter Bereiche zwei Eingänge für flexible Verlängerungen aufweisen und dass ihnen vorteilhafterweise Streikposten zugeordnet sind, um eine Stabilisierung auf dem Boden zu ermöglichen.

13. Tragbare Vorrichtung nach Anspruch 1, **dadurch gekennzeichnet, dass** die bewegliche Halteelement (2) eine prismatische Form hat und mit mindestens einem Handgriff (22) versehen ist.

14. Tragbare Vorrichtung nach Anspruch 1, **dadurch gekennzeichnet, dass** in dem Halteelement (2) zwei gegenüberliegende geneigte Seitenflächen (2D) realisiert sind, in denen die Sprühdüsen (6) mit einer vordefinierten Ausrichtung angeordnet sind.

## Revendications

1. Dispositif portable pour la lutte contre les parasites et la protection de zones contre la présence d'insectes, particulièrement nuisibles pour l'homme, comprenant:
- un élément de maintien mobile (2) muni de pièces d'ouverture (3) pour accéder à l'intérieur;
- au moins deux réservoirs (7, 8), logés dans ledit élément de maintien mobile (2), respectivement adaptés pour contenir une première et une deuxième solution liquide de principes actifs (70, 80);
- un premier et un deuxième conduit de sortie (71, 81), associés aux réservoirs respectifs (7, 8) et prévus pour le retrait de ceux-ci desdites première et deuxième solutions liquides de principes actifs (70, 80);
- une vanne d'arrêt à trois voies actionnée électriquement (90), ayant deux voies connectées auxdits premier et deuxième conduits de sortie (71, 81), tandis que la troisième voie est connectée à un conduit de distribution (9);
- une pompe (91), associée audit conduit de distribution (9), adaptée pour aspirer la première ou la deuxième solution liquide de principes actifs (70, 80) susmentionnée à partir des réservoirs respectifs (7, 8) et pour les envoyer, sous pression, à un système de distribution (50), qui est connecté en aval dudit conduit de distribution (9) et constitué d'une pluralité de conduits (5) munis, à leurs extrémités, de buses de pulvérisation correspondantes (6) adaptées pour projeter des jets de ladite première ou seconde solution liquide de principes actifs (70, 80) dans le milieu environnant, avec une direction prédéterminée;
- des moyens de commande et de contrôle (10), régis par un processeur électronique et adaptés pour actionner et désactiver le dispositif (1) conformément à des programmes et des cycles de fonctionnement prédéterminés, pour pulvériser ladite première ou deuxième solution liquide de principes actifs (70, 80) dans lesdites zones;
- au moins une batterie rechargeable (11), pour alimenter avec énergie électrique lesdits moyens de commande et de contrôle (10) et, à travers ceux-ci, la vanne d'arrêt à trois voies (90) et la pompe (9) susmentionnées;
- des moyens de recharge (65), associés à ladite batterie rechargeable (60), adaptés pour tirer de l'énergie électrique de sources extérieures et pour l'introduire dans ce dernière avec une tension et une intensité prédéterminées;
- un kit pour la protection de zones limitées comprenant une pluralité d'extensions flexibles (60), avec une pluralité de buses de pulvérisation associées aux extensions flexibles, des éléments de connexion, des éléments de fermeture et des éléments de montage, de sorte qu'un élément de montage à trois voies (3) remplace l'une des buses de pulvérisation (6) tandis que des éléments de fermeture sont associés à la face (2A) pour remplacer l'autre buse de pulvérisation (6), les extensions flexibles (60) étant associées aux extrémités libres de l'élément de fixation (3) pour fournir des buses de pulvérisation à des distances prédéfinies, jusqu'à ce qu'elles se rejoignent pour créer un chemin fermé ayant un périmètre égal à la somme des longueurs des extensions flexibles (60) utilisées.

2. Dispositif portable selon la revendication 1, **caractérisée en ce que** lesdits moyens de commande et de contrôle (10) comprennent: une unité (PLC - Contrôleur logique programmable) fonctionnellement connectée auxdites vanne d'arrêt à trois voies (90) et pompe (91); un clavier (12) d'une interface utilisateur/dispositif, interconnecté à ladite unité (PLC), pourvu d'au moins deux boutons de démarrage (121, 122) et un bouton d'arrêt (123), respectivement pour l'activation et la désactivation d'un cycle de fonctionnement sélectionné du dispositif (1) et de la pulvérisation correspondante de ladite première ou deuxième solution liquide de principes actifs (70, 80).

3. Dispositif portable selon la revendication 2, **caractérisée en ce que** dans lesdits moyens de commande et de contrôle (10) est prévu un récepteur de radiofréquence, intégré dans l'unité (PLC) susmentionnée, accordé sur le signal émis par une télécommande (14), dans laquelle sont prévus les mêmes deux boutons de démarrage (121, 122) et un bouton d'arrêt (123) présents dans ledit clavier (12).

4. Dispositif portable selon la revendication 1, **caractérisée en ce que** ledit moyen de charge (13) comprend un transformateur et/ou un redresseur de courant et est adapté pour recevoir l'énergie électrique d'au moins un panneau photovoltaïque (15) associé à une surface extérieure de l'élément de maintien mobile (2) susmentionné.

5. Dispositif portable selon la revendication 1, **caractérisée en ce que** lesdits moyens de charge (13) comprennent un transformateur et/ou un redresseur de courant et sont adaptés pour recevoir de l'énergie électrique d'une ligne électrique externe pouvant être connectée par un connecteur (16).

6. Dispositif portable selon la revendication 1, **caractérisé en ce que,** lesdits réservoirs (7, 8) sont munis d'un raccord de tuyau supérieur correspondant (7B, 8B) qui est incliné et fait face à un panneau amovible (31) définissant l'une desdites parties d'ouverture (3) dudit élément de maintien mobile (2).

7. Dispositif portable selon la revendication 1, **caractérisée en ce que** ledit élément de maintien mobile (2) a la forme d'une tour avec la face supérieure (2A) inclinée, et est équipé d'au moins deux roues (20), disposées sur un seul axe avec une position décalée par rapport au centre de masse de la tour 2 de celle-ci, de sorte que, en l'absence de forces de déplacement, il repose sur la face inférieure 2B et est stable dans une position verticale, et **en ce que** lesdites buses de pulvérisation (6) sont situées dans ladite face supérieure inclinée (2A) avec une orientation prédéterminée.

8. Dispositif portable selon la revendication 7, **caractérisée en ce que** ladite face supérieure inclinée (2A) de l'élément de maintien mobile (2) est convexe.

9. Dispositif portable selon la revendication 4 ou 7, **caractérisée en ce que** ledit élément de maintien mobile (2) présente une face supérieure inclinée (2A) d'un angle compris entre 10° et 45° par rapport à l'horizontale, dans laquelle est positionné ledit panneau PV (15), de sorte que l'élément de maintien mobile peut être orienté sur le sol de manière à maximiser la quantité de lumière solaire incidente sur le panneau photovoltaïque au cours d'une journée.

10. Dispositif portable selon la revendication 7, **caractérisée en ce que** ledit élément de maintien mobile (2) est associé à une poignée de manoeuvre (21), formée de manière à ce qu'un opérateur puisse exercer sur le même élément (2) un couple de basculement pour tourner autour de l'axe des roues (20) et soulever du sol la face inférieure (2B), de manière à déplacer le dispositif (1) sans glisser.

11. Dispositif portable selon la revendication 1, **caractérisée en ce que** lesdites extensions flexibles (60) sont associées, si nécessaire, à des buses de pulvérisation correspondantes (6) de sorte que les jets de ces dernières ont des positions d'éjection différentes de l'original et, par conséquent, des zones de couverture différentes, et **en ce que** dans ledit élément de maintien mobile (2) est prévu un logement (23) adapté pour contenir lesdites extensions flexibles (60) lorsqu'elles ne sont pas utilisées.

12. Dispositif portable selon l'une des revendications précédentes, **caractérisée en ce que** les buses de pulvérisation (6) dudit kit de protection de zones limitées fournissent deux entrées pour les extensions flexibles et qu'elles sont avantageusement associées à des piquets afin de permettre une stabilisation au sol.

13. Dispositif portable selon la revendication 1, **caractérisée en ce que** ledit élément de maintien mobile (2) a une forme prismatique et est muni d'au moins une poignée de préhension (22).

14. Dispositif portable selon la revendication 1, **caractérisée en ce que** dans ledit élément de maintien (2) sont réalisées deux surfaces latérales inclinées opposées (2D), dans lesquelles lesdites buses de pulvérisation (6) sont situées avec une orientation prédéfinie.
